Europäisches Patentamt

European Patent Office

Office européen des brevets

(19)

(11) Numéro de publication: **0 109 868**
**B1**

## (12) FASCICULE DE BREVET EUROPEEN

(45) Date de publication du fascicule du brevet:
08.01.86

(21) Numéro de dépôt: 83401951.5

(22) Date de dépôt: 06.10.83

(51) Int. Cl.⁴: **A 23 C 9/146** // A23C21/00

(54) **Procédé de préparation des boissons aromatisées de longue conservation, à base de lactosérum acidifié.**

(30) Priorité: **14.10.82 FR 8217225**

(43) Date de publication de la demande:
**30.05.84 Bulletin 84/22**

(45) Mention de la délivrance du brevet:
**08.01.86 Bulletin 86/2**

(84) Etats contractants désignés:
**AT BE CH DE GB IT LI NL SE**

(56) Documents cités:
**GB - A - 542 846**
**GB - A - 1 117 397**
**US - H - 990 005**

**CHEMICAL ABSTRACTS, vol. 84, no. 23, 7 juin 1976,
page 339, no. 163181h, Columbus, Ohio, US**

(73) Titulaire: **LAITERIES E. BRIDEL Société anonyme dite:,
B.P. No 5, F-35240 Retiers (FR)**

(72) Inventeur: **Barbier, Jean-Pierre, Le Pre Noe Noyal
S/Seiche, F-35230 St Erblon (FR)**
Inventeur: **Rialland, Jean-Paul, Le Champ Long,
F-35240 Retiers (FR)**

(74) Mandataire: **Doan, Dinh Nam et al, Cabinet BEAU DE
LOMENIE 55, rue d'Amsterdam, F-75008 Paris (FR)**

## Description

La présente invention concerne un nouveau procédé de préparation des boissons aromatisées de longue conservation, à base de lactosérum acidifié.

Les procédés classiques de fabrication des boissons aromatisées de longue conservation, à base de lactosérum acidifié, mettent en œuvre:

— d'une part, l'acidification du lactosérum pour en abaisser le pH à une valeur égale à 4,6 ou légèrement inférieure à celle-ci, soit par utilisation de ferments lactiques, soit par addition d'acides alimentaires,

— d'autre part, un traitement thermique de stérilisation à une température élevée, généralement de 120 à 140°C, nécessaire à la destruction totale de la flore microbienne qui se développe dans ledit lactosérum acidifié en vue d'assurer une longue conservation de celui-ci.

Toutefois, le traitement thermique du lactosérum acidifié dans la zone de pH indiquée présente l'inconvénient de provoquer la précipitation des protéines solubles contenues dans ledit lactosérum aux températures supérieures ou égales à 100°C.

Pour pallier cet inconvénient, on a déjà proposé d'incorporer des agents stabilisants compatibles avec le pH acide tels qu'alginates, carboxyméthylcellulose, gomme guar, etc., au lactosérum acidifié et d'appliquer à celui-ci un traitement d'homogénéisation préalablement à son traitement thermique.

Toutefois, l'utilisation d'un agent stabilisant introduit une matière d'origine non laitière dans le lactosérum, et le traitement d'homogénéisation constitue une technologie coûteuse.

L'état de la technique antérieure est constitué également par le brevet anglais N° 542846 et par la publication américaine US-H N° 990005.

Le brevet anglais N° 542846 décrit le traitement du petit-lait par un lit de granules de matière carbonée à propriété échangeuse de cations pour absorber les ions calcium contenus dans ce lait et en réduire la teneur en calcium.

La matière carbonée épuisée est régénérée par une solution aqueuse diluée de chlorure de sodium pour échanger le sodium avec le calcium qui a été soustrait au petit-lait et remplacer ce calcium par le sodium, lequel est susceptible de s'échanger avec le calcium contenu dans le lait frais.

La matière carbonée utilisée n'est donc pas un échangeur de cations sous forme acide (forme H$^+$).

Ce brevet anglais ne suggère donc pas le traitement du lactosérum par une résine échangeuse de cations sous forme H$^+$, en vue de l'acidifier à une valeur de pH égale ou inférieure à 3,8.

Il est même précisé dans ledit brevet anglais qu'avec les échangeurs carbonés, il n'est pas nécessaire de modifier le pH du lait à traiter.

La publication américaine US-H N° 990005 décrit la stérilisation du petit-lait à une température ultra-haute de 130-135°C suivie, après refroidissement, d'un traitement par électrodialyse pour réduire la teneur en cendres de ce petit-lait.

Cette publication ne mentionne que la déminéralisation du petit-lait par électrodialyse, mais ne suggère pas l'acidification du petit-lait.

De plus, le traitement thermique se fait avant l'électrodialyse du petit-lait.

Or, les inventeurs ont constaté que l'on peut rendre le lactosérum acidifié thermiquement stable à des températures élevées pouvant atteindre 160°C en abaissant son pH à une valeur égale ou inférieure à 3,8.

Toutefois, il est très difficile d'atteindre des valeurs de pH égales ou inférieures à 3,8 par fermentation lactique; de plus, cette dernière méthode nécessite le stockage d'importantes quantités de matière première pendant des temps longs et la maîtrise de la fermentation est toujours délicate.

Par contre, il est aisé d'acidifier le lactosérum à un pH égal ou inférieur à 3,8 par l'addition d'un acide alimentaire; toutefois, cette technologie nécessite l'utilisation d'une quantité d'acide relativement importante. Ainsi, 1 l de lactosérum de fromagerie dont le pH initial est de 6,2 nécessite l'addition de plus de 5 g d'acide citrique pour atteindre un pH de 3,6.

En outre, les matières minérales originelles dans le lactosérum exercent un effet tampon vis-à-vis de l'acide alimentaire ajouté, de sorte qu'il faut ajouter de grandes quantités d'acide pour atteindre le pH bas désiré et le produit fini aromatisé présente une saveur acide et salée, prononcée, désagréable.

La présente invention a donc pour objet un procédé de préparation des boissons aromatisées de longue conservation, à base de lactosérum acidifié thermiquement stable, sans addition d'agent stabilisant et présentant un goût agréable, sans note acide ou salée.

Ledit procédé a pour but de réaliser en une seule opération:

— l'acidification du lactosérum à un pH égal ou inférieur à 3,8 pour conférer audit produit une bonne stabilité thermique,

— et une décationisation suffisante pour en éliminer les goûts acides et salins désagréables, et permettre un choix plus vaste d'arômes.

Le procédé selon l'invention comporte une étape d'acidification et de décationisation simultanées du lactosérum par échange cationique avec une résine échangeuse de cations sous forme acide, ou par électrodialyse sur membranes cationiques, pendant la durée nécessaire pour abaisser le pH dudit lactosérum à une valeur égale ou inférieure à 3,8, de préférence de 3,2-3,8, suivie d'une étape de traitement thermique du produit acidifié et décationisé obtenu, à une température de 100 à 160°C, et plus particulièrement à 120-140°C pour le stériliser.

Eventuellement, on ajoute des agents édulcorants et des substances aromatisantes au lactosérum acidifié et décationisé, préalablement au traitement thermique de ce dernier.

Comme lactosérum, on peut utiliser tous les types de lactosérums et de préférence les lactosérums doux de fromagerie provenant de la fabrication des fromages à pâte pressée, à pâte cuite ou à pâte molle, et les lactosérums de caséine par le procédé d'échange d'ions.

Le lactosérum peut être enrichi en protéines par utilisation des technologies connues telles que l'ultrafiltration ou l'addition de protéines de lactosérum solubles.

Le lactosérum peut également être partiellement délactosé par cristallisation du lactose afin de fournir une boisson moins riche en sucres.

De même, le lactose du lactosérum peut être hydrolysé en glucose et en galactose afin de fournir une boisson acceptable par les personnes alactasiques.

Comme résines échangeuses de cations, on peut utiliser les résines échangeuses de cations sous forme acide, de type classique, utilisées en déminéralisation classique.

En particulier, on peut utiliser selon l'invention les résines échangeuses de cations fortement acides à squelette polystyrène-divinylbenzène portant des groupements acides sulfoniques et présentées sous forme de gels ou de solides macroporeux (billes, bâtonnets, etc.).

Les résines cationiques fortement acides sont commercialisées sous les marques suivantes:
— Duolite de Diaprosim-Diamond,
— Amberlite de Rohm et Hass,
— Lewatit de Bayer,
— Kastel de Montedison,
— Dowex de Dow Chemical,
— Relite de Residion,
— Zerolit de Permutit.

Les résines cationiques fortement acides suivantes sont préférées:
— Duolite C20 et C26,
— Amberlite IR 120 et 200,
— Lewatit S 100 et SP 112,
— Kastel C 300 et C 300 P,
— Dowex HCR-S et MSC-1.

On peut également utiliser des résines cationiques faiblement acides, à groupements fonctionnels acides carboxyliques.

Les résines cationiques faiblement acides préférées sont les suivantes:
— Duolite C 464,
— Amberlite IRC 84,
— Lewatit CNP,
— Kastel C 10,
— Dowex CCR-2.

Le traitement des lactosérums par la résine échangeuse de cations peut être réalisé par des techniques connues en soi, par exemple par percolation à travers un lit fixe de résine échangeuse ou par agitation mécanique ou pneumatique du mélange lactosérum-résine échangeuse de cations.

Après saturation de la résine échangeuse de cations par les cations du lactosérum, il est procédé à une régénération de ladite résine échangeuse par un acide. Après rinçage de la résine échangeuse ainsi régénérée avec de l'eau décationisée, la résine échangeuse régénérée est prête pour un nouveau cycle de traitement.

L'intervalle préférentiel de pH d'acidification du lactosérum est de 3,2 à 3,8.

Pour un pH supérieur à 3,8, le lactosérum n'est pas thermiquement stable aux températures supérieures ou égales à 100°C.

Pour un pH inférieur à 3,2, le lactosérum prend une saveur acide, désagréable.

L'intervalle de températures de traitement thermique du lactosérum est de 100 à 160°C; à ces températures, la totalité des germes microbiens contenus dans le lactosérum est détruite sans que les protéines solubles soient précipitées alors qu'une pasteurisation à 72°C ne tue qu'une partie de ces germes.

Le mode opératoire général pour la mise en œuvre du procédé selon la présente invention est décrit ci-après.

Le lactosérum doux, issu des fabrications fromagères, est débarrassé des fines de caillé par débourbage centrifuge. Après refroidissement, à une température inférieure à 10°C, pour éviter la prolifération bactérienne, le lactosérum est soumis à un échange de cations avec une résine cationique sous forme H+.

On peut utiliser une résine cationique fortement acide à groupements sulfoniques ou une résine cationique faiblement acide à groupements carboxyliques.

Lors de l'utilisation d'une résine cationique fortement acide, sous forme H+, le lactosérum est acidifié à un pH inférieur à 2,0, puis mélangé dans des proportions adéquates, avec du lactosérum non acidifié, pour que le mélange atteigne un pH compris entre 3,2 et 3,8, et de préférence entre 3,4 et 3,6. Les proportions sont généralement comprises entre 1 et 1,6 partie de lactosérum non acidifié par partie de lactosérum acidifié.

Lors de l'utilisation d'une résine cationique faiblement acide, sous forme H+, le lactosérum est acidifié jusqu'à ce que le pH moyen atteigne la valeur désirée (pH 3,2-3,8, de préférence 3,4-3,6), moment auquel le cycle de traitement est arrêté.

Le lactosérum acidifié ainsi obtenu est additionné de la quantité suffisante de sucre et de substances aromatisantes. Le mélange sucré et aromatisé est soumis à la stérilisation UHT entre 100 et 160°C, de préférence entre 120 et 140°C, et conditionné aseptiquement (UHT=ultra-hautes températures)

Selon une variante du procédé de l'invention, une partie du lactosérum est soumise à un traitement d'ultrafiltration jusqu'au niveau de concentration en protéines désiré puis acidifié par mélange avec du lactosérum préalablement acidifié et décationisé, dans les proportions définies par la concentration en protéines désiré et par la valeur du pH désiré pour le mélange final.

Selon une autre variante du procédé, le lactosérum est concentré pour amener le lactose qu'il contient à un niveau de sursaturation tel que le lactose puisse cristalliser. Le lactose cristallisé est séparé du lactosérum. Le lactosérum délactosé est dilué dans une quantité suffisante d'eau (sensiblement équivalente à l'eau évaporée lors de l'opération de concentration), de telle sorte que sa teneur en sels minéraux retrouve la même valeur que celle dans du lactosérum initial. Le produit est acidifié comme décrit précédemment puis aromatisé et soumis au traitement de stérilisation.

Les exemples suivants non limitatifs sont donnés pour illustrer la fabrication des boissons aromatisées à base de lactosérum acidifié, contenant des protéines, sans addition de stabilisants, et de longue conservation.

*Exemple 1 :*

Dans cet exemple, on décrit la préparation d'une boisson aromatisée à partir de lactosérum acidifié par une résine échangeuse de cations faiblement acide.

1000 l de lactosérum de fromagerie, de pH 6,35, préalablement débarrassés des fines de caillé par débourbage centrifuge et refroidis à 10°C sont traités par percolation au travers d'un lit de 40 l de résine échangeuse de cations faiblement acide commercialisée sous le nom de Dowex CCR-2 (à groupements acides carboxyliques) présentée sous forme de billes de 0,3 à 1,2 mm de diamètre. On récupère un lactosérum décationisé acidifié à pH 3,55; la résine épuisée est lavée à l'eau et régénérée par une solution d'acide chlorhydrique à 6%.

75 kg de saccharose et 0,8 kg d'arôme pomme sont ajoutés au lactosérum acidifié et le mélange ainsi obtenu est préchauffé dans un échangeur de plaques à 85°C puis stérilis, par voie indirecte à 135°C pendant 2 à 5 s. Après refroidissement, le produit obtenu est conditionné aseptiquement.

La composition du produit analysé avant son aromatisation et les résultats des examens physiques et organoleptiques effectués sur le produit 48 h après son conditionnement sont groupés dans le tableau I qui suit.

*Tableau I*

| | Lactosérum de départ | Lactosérum acidifié par échange de cations |
|---|---|---|
| Matière sèche g/l | 64,0 | 62,4 |
| Acidité °D (degré Dornic) | 14 | 40 |
| pH | 6,35 | 3,55 |
| Calcium % ES (% de l'extrait sec) | 0,69 | 0,06 |
| Sodium % ES | 0,65 | 0,65 |
| Potassium % ES | 2,6 | 2,25 |
| Chlorures % ES | 2,90 | 2,95 |
| Protéines g/l | 8,9 | 8,75 |
| Stabilité | — | bonne, aucune précipitation, aucun dépôt |
| Saveur | — | douce, agréable |

*Exemple 2 :*

Dans cet exemple, on décrit la préparation d'une boisson aromatisée à partir de lactosérum acidifié par une résine échangeuse de cations fortement acide.

450 l de lactosérum de fromagerie, de pH 6,3, débarrassés des fines de caillé et refroidis à 8°C sont traités par percolation au travers d'un lit de 30 l de résine échangeuse de cations fortement acide de type gel, commercialisée sous le nom de Duolite C 20 (à groupements fonctionnels acides sulfoniques).

On récupère un lactosérum décationisé acidifié à pH 1,95.

On mélange ce dernier avec 550 l de lactosérum de fromagerie froid à 8°C non traité pour obtenir 1000 l de lactosérum acidifié à pH 3,55.

Après addition de 75 kg de saccharose et de 800 g d'arôme pomme, préchauffage à 85°C et stérilisation à 135°C, le produit obtenu est conditionné aseptiquement.

Les échantillons sont examinés et dégustés 48 h après le conditionnement.

La composition du produit analysé avant son aromatisation et les résultats des examens physiques et organoleptiques effectués sur le produit 48 h après son conditionnement sont groupés dans le tableau II qui suit.

*Tableau II*

| | Lactosérum de départ | Lactosérum acidifié par échange de cations |
|---|---|---|
| Matière sèche g/l | 64,6 | 62,5 |
| pH | 6,3 | 3,55 |
| Acidité °D | 14 | 41 |
| Calcium % ES | 0,68 | 0,45 |
| Sodium % ES | 0,75 | 0,50 |
| Potassium % ES | 2,5 | 1,75 |
| Chlorures % ES (NaCl) | 2,95 | 3,05 |

| | Lactosérum de départ | Lactosérum acidifié par échange de cations |
|---|---|---|
| Protéines g/l (N X 6,38) | 9,1 | 8,65 |
| Aspect, couleur | — | opalescente |
| Stabilité | — | bonne, aucune précipitation, aucun dépôt |
| Saveur | — | douce, agréable |

*Exemple 3:*

Dans cet exemple, on décrit la préparation d'une boisson aromatisée à partir de lactosérum acidifié par métathèse acide (ou électrodialyse sur membranes cationiques).

1000 l de lactosérum de fromagerie, de pH 6,35, refroidis à 8°C sont traités dans un appareillage d'électrodialyse classique équipé de membranes cationiques contre une solution d'acide chlorhydrique dilué jusqu'à ce que le pH atteigne la valeur de 3,5. Le lactosérum ainsi obtenu est ensuite aromatisé et stérilisé tel que décrit précédemment à l'exemple 1. La composition du produit analysé avant son aromatisation est donnée dans le tableau III qui suit.

*Tableau III*

| | Lactosérum de départ | Lactosérum traité par électrodialyse |
|---|---|---|
| pH | 6,35 | 3,5 |
| Matière sèche g/l | 67,2 | 64,4 |
| Calcium % ES | 0,71 | 0,63 |
| Sodium % ES | 0,64 | 0,34 |
| Potassium % ES | 2,17 | 0,95 |
| Chlorures % ES | 2,85 | 2,90 |
| Protéines g/l | 8,70 | 8,40 |

Le produit obtenu reste stable dans le temps (aucune précipitation, aucun dépôt) et conserve un goût agréable au bout de 6 mois de conservation.

*Exemple 4:*

Dans cet exemple, on décrit la préparation d'une boisson enrichie en protéines à base de lactosérum acidifié par échange de cations et concentré par ultrafiltration.

1000 l de lactosérum de fromagerie acidifié par échange cationique à pH 1,75 sont mélangés avec 1250 l de lactosérum de fromagerie non traité pour obtenir 2250 l de lactosérum acidifié à pH 3,5. Ce mélange est soumis à une ultrafiltration à 52°C. On recueille 1000 l de rétentat de lactosérum que l'on soumet à l'aromatisation et à la stérilisation dans les conditions précédemment décrites à l'exemple 1.

La composition du produit analysé avant son aromatisation est donnée dans le tableau IV qui suit.

*Tableau IV*

| | Lactosérum de départ | Lactosérum acidifié avant ultrafiltration | Lactosérum acidifié et concentré par ultrafiltration |
|---|---|---|---|
| Matière sèche g/l | 64,2 | 62,4 | 72,0 |
| pH | 6,3 | 3,5 | 3,47 |
| Acidité °D | 14 | 46 | 50 |
| Calcium % ES (% de l'extrait sec) | 0,7 | 0,44 | 0,42 (300 mg/l) |
| Sodium % ES | 0,75 | 0,49 | 0,39 (280 mg/l) |
| Potassium % ES | 2,45 | 1,75 | 1,25 (900 mg/l) |
| Chlorures % ES (NaCl) | 2,90 | 2,95 | 2,75 |
| Protéines g/l | 9,0 | 8,65 | 15,8 (22% de la matière sèche) |

La boisson enrichie en protéines de lactosérum reste stable à la conservation (6 mois) et présente une saveur agréable légèrement lactée.

De plus, l'acidité du lactosérum avant l'ultrafiltration exerce une certaine activité bactériostatique pendant toute l'opération d'ultrafiltration.

*Essai comparatif A:*

A titre comparatif, on a préparé un lactosérum acidifié par fermentation lactique et stabilisé par addition de stabilisant.

A 1000 l de lactosérum de fromagerie débarrassé des fines de caillé et refroidi à 10°C, sont ajoutés, sous agitation très énergique, 5 kg d'alginate de sodium en tant qu'agent stabilisant compatible avec le bas pH. Le mélange homogène est pasteurisé à 72°C et refroidi immédiatement sur un échangeur de plaques à la température d'incubation. La fermentation est assurée par 20 kg d'un mélange de ferments lactiques pendant 12 h à 45°C pour obtenir un pH de 4,2.

Le lactosérum acidifié stabilisé est refroidi à 8°C et on y ajoute 75 kg de sucre et 800 g d'arôme pomme.

Le mélange préchauffé à 85°C est homogénéisé sous une pression de 250 kg/cm² puis stérilisé et conditionné tel que décrit ci-dessus à l'exemple 1.

La composition du produit analysé avant son aromatisation et les résultats des examens physiques et organoleptiques effectués sur le produit 48 h après son conditionnement sont groupés dans le tableau V qui suit.

*Tableau V*

|  | Lactosérum de départ (identique à celui de l'exemple 1) | Lactosérum acidifié par fermentation lactique et stabilisé |
|---|---|---|
| Matière sèche g/l | 64,0 | 63,0 |
| Acidité °D | 14 | 53 |
| pH | 6,35 | 4,2 |
| Calcium % ES | 0,69 | 0,68 |
| Sodium % ES | 0,65 | 0,65 |
| Potassium % ES | 2,6 | 2,6 |
| Chlorures % ES | 2,90 | 2,90 |
| Protéines g/l | 8,9 | 8,95 |
| Stabilité | — | moyenne (léger dépôt) |
| Saveur | — | acidulée |

La boisson obtenue a une stabilité acceptable grâce à l'addition d'un stabilisant et au traitement d'homogénéisation. La teneur en acide dosable exprimée en acidité Dornic est importante et donne au produit un goût acidulé qui est encore renforcé par les sels minéraux présents en quantité importante dans le lactosérum.

La boisson obtenue par échange de cations à l'exemple 1 présente des qualités gustatives meilleures et une stabilité au moins équivalente à celle du produit acidifié par fermentation et stabilisé par addition d'un stabilisant et homogénéisation, sans que sa fabrication fasse intervenir ces deux opérations.

Quand on répète l'essai comparatif décrit ci-dessus, mais sans addition de stabilisant ni homogénéisation, la boisson acidifiée par fermentation laisse immédiatement précipiter les protéines solubles lors de la stérilisation à 135°C.

*Essais comparatifs B:*

A titre comparatif, on a également préparé:
— un lactosérum acidifié par fermentation lactique,
— et un lactosérum acidifié artificiellement par de l'acide citrique.

1a) *Acidification naturelle*

1000 l de lactosérum de fromagerie sont pasteurisés à basse température (63°C pendant 30 min) pour éviter la dénaturation des protéines puis refroidis à 45°C.

30 kg d'un mélange de ferments lactiques (Streptococcus thermophilus + lactobacillus bulgaricus + lactobacillus helveticus) sont ajoutés au sérum. Après 16 h d'incubation, le pH atteint la valeur de 3,7. Le mélange est refroidi à 8°C.

1b) *Acidification artificielle*

A 1000 l de lactosérum de fromagerie refroidis à 8°C, sont ajoutés 5,9 kg d'acide citrique, pour atteindre le pH 3,6.

75 kg de saccharose et 800 g d'arôme pomme sont ajoutés aux différents lactosérums acidifiés.

Après préchauffage dans un échangeur à plaques à 85°C, les sérums sont stérilisés par voie indirecte à 135°C puis conditionnés aseptiquement après refroidissement. Les échantillons sont examinés et dégustés 48 h après conditionnement.

Les compositions des produits analysés avant leur aromatisation et les résultats des examens physiques et organoleptiques effectués sur les produits 48 h après leur conditionnement sont également groupés dans le tableau VI qui suit.

*(Tableau en page suivante)*

Les boissons obtenues dans ces essais ont une stabilité moyenne à bonne du fait que le pH du lactosérum a été abaissé à 3,7 et à 3,6, mais leur acidité dosable exprimée en Dornic est très forte (83°D pour le produit acidifié par fermentation et 95°D pour le produit acidifié par addition d'acide contre 41°D seulement pour le produit obtenu selon l'invention à l'exemple 2) et, de ce fait, ces boissons présentent un goût acide prononcé, désagréable.

Par contre, malgré son pH acide (3,55), le lactosérum acidifié par échange de cations selon l'invention à l'exemple 2 ne confère pas à la boisson aromatisée un goût acide, contrairement aux pro-

*Tableau VI*

|  | Lactosérum de départ (identique à celui de l'exemple 2) | Lactosérum acidifié par fermentation lactique | Lactosérum acidifié par addition d'acide citrique |
|---|---|---|---|
| Matière sèche g/l | 64,6 | 62 | 66,0 |
| pH | 6,3 | 3,7 | 3,60 |
| Acidité °D | 14 | 83 | 95 |
| Calcium % ES | 0,68 | 0,67 | 0,65 |
| Sodium % ES | 0,75 | 0,75 | 0,70 |
| Potassium % ES | 2,5 | 2,45 | 2,35 |
| Chlorures % ES (NaCl) | 2,95 | 2,90 | 2,75 |
| Protéines g/l (N X 6,38) | 9,1 | 9,0 | 8,5 |
| Stabilité | — | moyenne | bonne |
| Saveur | — | acide | acide, prononcée |

duits obtenus par fermentation lactique ou par addition d'acide citrique; compte tenu de la neutralité gustative du produit obtenu selon l'invention, on peut l'aromatiser avec un choix étendu d'arômes.

Quand on répète les essais comparatifs B décrits ci-dessus, mais en acidifiant les lactosérums à un pH supérieur à 3,8, par exemple à pH 4,2, les produits acidifiés laissent précipiter les protéines solubles lors de la stérilisation à 135°C.

## Revendications pour les Etats contractants BE CH DE GB IT LI NL SE

1. Procédé de préparation des boissons aromatisées de longue conservation, à base de lactosérum acidifié, caractérisé en ce qu'il comporte:
— une étape d'acidification et de décationisation simultanées du lactosérum par échange cationique avec une résine échangeuse de cations sous forme acide, ou par électrodialyse sur membranes cationiques, pendant la durée nécessaire pour abaisser le pH dudit lactosérum à une valeur égale ou inférieure à 3,8 et pour le décationiser au moins partiellement,
— suivie d'une étape de traitement thermique du produit acidifié et décationisé à une température de 100 à 160°C pour stériliser ce dernier.

2. Procédé selon la revendication 1, caractérisé en ce que l'on ajoute au lactosérum acidifié à un pH égal ou inférieur à 3,8 des agents édulcorants et aromatisants avant son traitement thermique.

3. Procédé selon la revendication 1 ou 2, caractérisé en ce que le lactosérum est acidifié à un pH de 3,2 à 3,8.

4. Procédé selon la revendication 1 ou 2, caractérisé en ce que le traitement thermique se fait à une température de 120 à 140°C.

5. Procédé selon la revendication 1, caractérisé en ce que le lactosérum de départ est au moins partiellement du lactosérum enrichi en protéines par ultrafiltration ou par addition de protéines solubles de lactosérum.

6. Procédé selon la revendication 1, caractérisé en ce que le lactosérum de départ est au moins partiellement du lactosérum partiellement délactosé.

7. Procédé selon la revendication 1, caractérisé en ce que le lactose contenu dans le lactosérum de départ a été préalablement hydrolysé.

8. Procédé selon la revendication 1, caractérisé en ce que la résine échangeuse de cations sous forme acide est une résine fortement acide portant des groupements acides sulfoniques ou une résine faiblement acide portant des groupements acides carboxyliques.

9. Procédé selon l'une des revendications 1, 5, 6 et 7, caractérisé en ce que le lactosérum est acidifié par échange cationique à un pH inférieur à 2 puis mélangé avec du lactosérum non acidifié dans des proportions adéquates pour amener un pH du mélange entre 3,2 et 3,8.

10. Boissons aromatisées de longue conservation, à base de lactosérum acidifié, obtenues selon l'une des revendications précédentes 1 à 9.

## Revendications pour l'Etat contractant: AT

1. Procédé de préparation des boissons aromatisées de longue conservation, à base de lactosérum acidifié, caractérisé en ce qu'il comporte:
— une étape d'acidification et de décationisation simultanées du lactosérum par échange cationique avec une résine échangeuse de cations sous forme acide, ou par électrodialyse sur membranes cationiques, pendant la durée nécessaire pour abaisser le pH dudit lactosérum à une valeur égale ou inférieure à 3,8 et pour le décationiser au moins partiellement,
— suivie d'une étape de traitement thermique du produit acidifié et décationisé à une température de 100 à 160°C pour stériliser ce dernier.

2. Procédé selon la revendication 1, caractérisé en ce que l'on ajoute au lactosérum acidifié à un pH égal ou inférieur à 3,8 des agents édulcorants et aromatisants avant son traitement thermique.

3. Procédé selon la revendication 1 ou 2, caractérisé en ce que le lactosérum est acidifié à un pH de 3,2 à 3,8.

4. Procédé selon la revendication 1 ou 2, caractérisé en ce que le traitement thermique se fait à une température de 120 à 140°C.

5. Procédé selon la revendication 1, caractérisé en ce que le lactosérum de départ est au moins partiellement du lactosérum enrichi en protéines par ultrafiltration ou par addition de protéines solubles de lactosérum.

6. Procédé selon la revendication 1, caractérisé en ce que le lactosérum de départ est au moins partiellement du lactosérum partiellement délactosé.

7. Procédé selon la revendication 1, caractérisé en ce que le lactose contenu dans le lactosérum de départ a été préalablement hydrolysé.

8. Procédé selon la revendication 1, caractérisé en ce que la résine échangeuse de cations sous forme acide est une résine fortement acide portant des groupements acides sulfoniques ou une résine faiblement acide portant des groupements acides carboxyliques.

9. Procédé selon l'une des revendications 1, 5, 6 et 7, caractérisé en ce que le lactosérum est acidifié par échange cationique à un pH inférieur à 2 puis mélangé avec du lactosérum non acidifié dans des proportions adéquates pour amener le pH du mélange entre 3,2 et 3,8.

## Patentansprüche für die Vertragsstaaten BE, CH, DE, GB, IT, LI, NL, SE

1. Verfahren zur Herstellung von aromatischen Getränken mit langer Konservierungszeit auf der Basis von saurer Molke, dadurch gekennzeichnet, dass es umfasst:
— eine Stufe der gleichzeitigen Ansäuerung und Entkationisierung der Molke durch Kationenaustausch mit einem Kationenaustauscherharz in saurer Form oder durch Elektrodialyse über Kationenmembranen, während einer zum Absenken des pH-Werts der Molke auf einen Wert gleich oder unter 3,8 und zum zumindest teilweisen Entkationisieren notwendigen Zeitdauer,
— gefolgt von einer Stufe der Wärmebehandlung des angesäuerten und entkationisierten Produkts bei einer Temperatur von 100 bis 160°C zum Sterilisieren desselben.

2. Verfahren nach Anspruch 1, dadurch gekennzeichnet, dass man zur angesäuerten Molke bei einem pH-Wert von gleich oder unter 3,8 vor der Wärmebehandlung derselben Süss- und Geschmackstoffe zugibt.

3. Verfahren nach Anspruch 1 oder 2, dadurch gekennzeichnet, dass die Molke auf einen pH-Wert von 3,2 bis 3,8 angesäuert wird.

4. Verfahren nach Anspruch 1 oder 2, dadurch gekennzeichnet, dass die Wärmebehandlung bei einer Temperatur von 120 bis 140°C erfolgt.

5. Verfahren nach Anspruch 1, dadurch gekennzeichnet, dass die Ausgangsmolke zumindest teilweise durch Ultrazentrifugieren oder durch Zugabe von löslichen Molkeproteinen mit Proteinen angereicherte Molke ist.

6. Verfahren nach Anspruch 1, dadurch gekennzeichnet, dass die Ausgangsmolke zumindest zum Teil teilweise delaktosierte Molke ist.

7. Verfahren nach Anspruch 1, dadurch gekennzeichnet, dass die in der Ausgangsmolke enthaltene Lactose zuvor hydrolysiert wurde.

8. Verfahren nach Anspruch 1, dadurch gekennzeichnet, dass das Kationenaustauscherharz in saurer Form ein stark saures Harz mit Sulfonsäuregruppen oder ein schwach saures Harz mit Carbonsäuregruppen ist.

9. Verfahren nach einem der Ansprüche 1, 5, 6 und 7, dadurch gekennzeichnet, dass die Molke durch Kationenaustausch auf einen pH-Wert von unter 2 angesäuert und die Mischung dann mit nichtangesäuerter Molke in entsprechenden Mengen vermischt wird, um den pH-Wert der Mischung auf zwischen 3,2 und 3,8 zu bringen.

10. Aromatische Getränke mit langer Konservierungszeit auf der Basis von saurer Molke, hergestellt nach einem der vorhergehenden Ansprüche 1 bis 9.

## Patentansprüche für den Vertragsstaat: AT

1. Verfahren zur Herstellung von aromatischen Getränken mit langer Konservierungszeit auf der Basis von saurer Molke, dadurch gekennzeichnet, dass es umfasst:
— eine Stufe der gleichzeitigen Ansäuerung und Entkationisierung der Molke durch Kationenaustausch mit einem Kationenaustauscherharz in saurer Form oder durch Elektrodialyse über Kationenmembranen, während einer zum Absenken des pH-Werts der Molke auf einen Wert gleich oder unter 3,8 und zum zumindest teilweisen Entkationisieren notwendigen Zeitdauer,
— gefolgt von einer Stufe der Wärmebehandlung des angesäuerten und entkationisierten Produkts bei einer Temperatur von 100 bis 160°C zum Sterilisieren desselben.

2. Verfahren nach Anspruch 1, dadurch gekennzeichnet, dass man zur angesäuerten Molke bei einem pH-Wert von gleich oder unter 3,8 vor der Wärmebehandlung derselben Süss- und Geschmackstoffe zugibt.

3. Verfahren nach Anspruch 1 oder 2, dadurch gekennzeichnet, dass die Molke auf einen pH-Wert von 3,2 bis 3,8 angesäuert wird.

4. Verfahren nach Anspruch 1 oder 2, dadurch gekennzeichnet, dass die Wärmebehandlung bei einer Temperatur von 120 bis 140°C erfolgt.

5. Verfahren nach Anspruch 1, dadurch gekennzeichnet, dass die Ausgangsmolke zumindest teilweise durch Ultrazentrifugieren oder durch Zugabe von löslichen Molkeproteinen mit Proteinen angereicherte Molke ist.

6. Verfahren nach Anspruch 1, dadurch gekennzeichnet, dass die Ausgangsmolke zumindest zum Teil teilweise delaktosierte Molke ist.

7. Verfahren nach Anspruch 1, dadurch gekennzeichnet, dass die in der Ausgangsmolke enthaltene Lactose zuvor hydrolysiert wurde.

8. Verfahren nach Anspruch 1, dadurch gekennzeichnet, dass das Kationenaustauscherharz in saurer Form ein stark saures Harz mit Sulfonsäuregruppen oder ein schwach saures Harz mit Carbonsäuregruppen ist.

9. Verfahren nach einem der Ansprüche 1, 5, 6 und 7, dadurch gekennzeichnet, dass die Molke durch Kationenaustausch auf einen pH-Wert von unter 2 angesäuert und die Mischung dann mit nichtangesäuerter Molke in entsprechenden Mengen vermischt wird, um den pH-Wert der Mischung auf zwischen 3,2 und 3,8 zu bringen.

### Claims for contracting States BE, CH, DE, GB, IT, LI, NL, SE

1. Process for preparing long preservation flavoured beverages, based on acidified milk wheys, characterized in that it comprises:
— a step of simultaneous acidification and decationization of milk whey by cation exchange with a cation exchange resin in acid form, or by electrodialysis on cationic membranes, for the time necessary to lower the pH of said whey to a value equal to or less than 3.8 and to decationize at least partly
— followed by a heat treatment step of the acidified and decationized product at a temperature of 100 to 160°C to sterilize the latter.

2. Process according to claim 1, characterized in that sweetening and flavouring agents are added to the whey acidified to a pH equal to or less than 3.8, before its heat treatment.

3. Process according to claim 1 or 2, characterized in that the milk whey is acidified to a pH of 3,2 to 3.8.

4. Process according to claim 1 or 2, characterized in that the heat treatment is done at a temperature of 120 to 140°C.

5. Process according to claim 1, characterized in that the starting milk whey is at least partially whey enriched in proteins by ultra-filtration or by the addition of soluble whey proteins.

6. Process according to claim 1, characterized in that at least a part of the starting whey is partially delactosed whey.

7. Process according to claim 1, characterized in that the lactose contained in the starting whey has been hydrolyzed beforehand.

8. Process according to claim 1, characterized in that the cation exchange resin in acid form is a strongly acid resin bearing sulfonic acid groups or a weakly acid resin bearing carboxylic acid groups.

9. Process according to one of claims 1, 5, 6 and 7, characterized in that the milk whey is acidified by cation exchange to a pH less than 2 and then mixed with unacidified whey in the proportions suitable to result in a pH of the mixture between 3.2 and 3.8.

10. Long preservation flavoured beverages, based on acidified milk whey, obtained according to one of the preceding claims 1 to 9.

### Claims for contracting State: AT

1. Process for preparing long preservation flavoured beverages, based on acidified milk wheys, characterized in that it comprises:
— a step of simultaneous acidification and decationization of milk whey by cation exchange with a cation exchange resin in acid form, or by electrodialysis on cationic membranes, for the time necessary to lower the pH of said whey to a value equal to or less than 3.8 and to decationize at least partly
— followed by a heat treatment step of the acidified and decationized product at a temperature of 100 to 160°C to sterilize the latter.

2. Process according to claim 1, characterized in that sweetening and flavouring agents are added to the whey acidified to a pH equal to or less than 3.8, before its heat treatment.

3. Process according to claim 1 or 2, characterized in that the milk whey is acidified to a pH of 3.2 to 3.8.

4. Process according to claim 1 or 2, characterized in that the heat treatment is done at a temperature of 120 to 140°C.

5. Process according to claim 1, characterized in that the starting milk whey is at least partially whey enriched in proteins by ultra-filtration or by the addition of soluble whey proteins.

6. Process according to claim 1, characterized in that at least a part of the starting whey is partially delactosed whey.

7. Process according to claim 1, characterized in that the lactose contained in the starting whey has been hydrolyzed beforehand.

8. Process according to claim 1, characterized in that the cation exchange resin in acid form is a strongly acid resin bearing sulfonic acid groups or a weakly acid resin bearing carboxylic acid groups.

9. Process according to one of claims 1, 5, 6 and 7, characterized in that the milk whey is acidified by cation exchange to a pH less than 2 and then mixed with unacidified whey in the proportions suitable to result in a pH of the mixture between 3.2 and 3.8.